# FASCICULE DE BREVET EUROPEEN

(11) **EP 3 088 247 B1**
(45) Date de publication et mention de la délivrance du brevet: **17.07.2019**
(21) Numéro de dépôt: 16167487.4
(22) Date de dépôt: 28.04.2016
(51) Int. Cl.: B60Q 1/14, H05B 33/08, B60Q 1/04

(54) **DISPOSITIF LUMINEUX RÉALISANT PLUSIEURS FONCTIONS LUMINEUSES D'UN VÉHICULE AUTOMOBILE À L'AIDE DE GROUPES DE SOURCES DE LUMIÈRE DÉDIÉS PAR FONCTION**
LEUCHTVORRICHTUNG, DIE MEHRERE LEUCHTFUNKTIONEN EINES KRAFTFAHRZEUGS MITHILFE VON JEWEILS FUNKTIONSDEDIZIERTEN GRUPPEN VON LICHTQUELLEN ERFÜLLT
LIGHTING DEVICE PERFORMING A PLURALITY OF LIGHTING FUNCTIONS OF A MOTOR VEHICLE BY MEANS OF LIGHT SOURCES DEDICATED BY FUNCTION

(30) Priorité: 29.04.2015 FR 1553889
(43) Date de publication de la demande: 02.11.2016
(73) Titulaire: VALEO VISION, 93012 Bobigny Cedex (FR)
(72) Inventeur: LEVASSEUR, Stéphane, 49125 BRIOLLAY (FR)

(56) Documents cités:
- FR-A1- 2 875 670
- JP-A- 2010 241 347
- US-A1- 2004 075 393
- US-A1- 2004 179 366
- US-A1- 2012 086 336
- US-A1- 2014 111 087

## Description

L'invention a trait au domaine des dispositifs lumineux d'un véhicule automobile, tels que des projecteurs utilisant une pluralité de sources lumineuses, par exemple de type diode électroluminescente, LED, pour réaliser plusieurs fonctions lumineuses du véhicule automobile.

Dans le domaine des dispositifs lumineux pour véhicules automobiles, il est intéressant de pouvoir créer une même signature optique pour différentes fonctions lumineuses réalisées. Par exemple il est utile que les feux de position (PL, « position light ») aient une apparence similaire ou identique aux feux diurnes (DRL, « daytime running light »), qui ont néanmoins une puissance lumineuse plus élevée.

Il a été proposé d'utiliser les mêmes sources lumineuses, par exemple de type diode électroluminescente, LED, pour atteindre un tel objectif. Selon le type de sources choisi, les diodes peuvent en effet émettre une lumière plus ou moins puissante selon l'intensité du courant électrique qui les traverse. De manière connue l'alimentation électrique de LEDs est pilotée par un dispositif qui comprend un circuit convertisseur, apte à convertir une tension d'entrée, typiquement fournie par la batterie du véhicule automobile, en une tension de sortie d'une valeur différente, appliquée aux LEDs montées en charge du convertisseur. Cependant, une telle solution se limite à l'utilisation du même type de LED pour l'émission d'une lumière faible et d'une lumière forte, tandis que tous les LEDs ne sont pas nécessairement bien adaptées à des modes d'opération multiples.

Document US 2014/0111087 A1 divulgue un dispositif lumineux de véhicule automobile comprenant des moyens de pilotage de l'alimentation d'une pluralité de sources lumineuses étant divisée en plusieurs groupes de sources, chaque groupe réalisant une fonction lumineuse spécifique du dispositif et ayant un besoin de courant électrique spécifique pour la réalisation de ladite fonction lumineuse.

L'invention a pour objectif de pallier à au moins un des problèmes posés par l'art antérieur. Plus précisément, l'invention a pour objectif de proposer un dispositif lumineux pour un véhicule automobile qui utilise une pluralité de sources lumineuses divisée en plusieurs groupes, chaque groupe réalisant une fonction lumineuse spécifique, et chaque groupe étant alimenté de manière exclusive des autres groupes. L'invention a également pour objectif de proposer un procédé d'alimentation faisant appel au dispositif conforme à l'invention.

L'invention a pour objet un dispositif lumineux pour un véhicule automobile comprenant un circuit électrique comprenant des moyens de commutation et une pluralité de sources de lumière et des moyens de pilotage de l'alimentation d'une pluralité de sources de lumière, la pluralité de sources étant divisée en au moins deux groupes de sources. Le dispositif est remarquable en ce que chaque groupe est destiné à remplir une fonction lumineuse spécifique du dispositif et se distingue par un besoin de courant électrique d'une intensité spécifique pour la réalisation de ladite fonction lumineuse. Le dispositif est en outre remarquable en ce que les moyens de pilotage sont aptes à alimenter de manière sélective chacun des groupes de sources de lumière de manière exclusive des autres groupes.

Les au moins deux groupes de sources lumineuses peuvent préférentiellement être des groupes distincts.

De préférence un premier groupe de sources lumineuses peut présenter un besoin de courant électrique d'une première intensité, et un deuxième groupe de sources lumineuses peut présenter un besoin de courant électrique d'une deuxième intensité, la deuxième intensité étant inférieure à la première intensité.

Les fonctions lumineuses peuvent avantageusement être des fonctions photométriques réglementaires prédéterminées.

Les moyens de pilotage comprennent un convertisseur DC/DC apte à convertir une tension électrique d'entrée en une tension électrique de sortie, en charge duquel chacun des groupes est commutable de manière exclusive des autres groupes à l'aide desdits moyens de commutation. Les moyens de commutation sont configurés pour commuter de manière sélective un des groupes de sources de lumière en charge du convertisseur, en dépendance d'un signal reçu de moyens de détection. Ledit signal est représentatif d'une valeur de l'intensité de courant électrique qui circule dans le circuit électrique monté en charge du convertisseur et/ou de la valeur de tension électrique détectée aux bornes dudit circuit.

Avantageusement, les groupes de sources de lumière et les moyens de commutation peuvent être montés sur un même support, par exemple réalisé par un circuit imprimé. Le convertisseur DC/DC et/ou les moyens de commutation peuvent être disposés sur un support distinct de celui des groupes de sources de lumière.

De préférence, les moyens de commutation peuvent comprendre un élément microcontrôleur.

Les moyens de commutation peuvent préférentiellement comprendre pour chaque groupe de sources de lumière un élément interrupteur, préférentiellement un transistor. Le transistor peut être du type transistor à effet de champ, FET et préférentiellement transistor à effet de champ à grille métallique électriquement isolée du substrat par un oxyde diélectrique, MOSFET.

Les groupes de sources de lumière peuvent de préférence être disposés sur des branches de circuit parallèles les unes aux autres, le circuit étant monté en charge du convertisseur. De préférence, les moyens de commutation sont dans ce cas configurés de façon à permettre le passage de courant électrique dans une des branches du montage de manière sélective et de manière exclusive des autres branches.

Alternativement, les groupes de sources de lumière peuvent être disposés sur une même branche d'un circuit monté en charge du convertisseur. Dans ce cas, les moyens de commutation sont préférentiellement configurés de façon à permettre le passage de courant électrique à travers les sources de lumière d'un des groupes de sources de manière sélective, en court-circuitant les sources des autres groupes. Avantageusement, les sources appartenant à un groupe sont montées en série de manière séquentielle. Tous les groupes peuvent de préférence être montés en série de manière séquentielle.

De préférence, les moyens de détection peuvent comprendre une résistance de shunt branchée en aval des groupes de sources de lumière et reliée à la masse. La résistance permet de mesurer une indication de l'intensité du courant circulant dans le circuit monté en charge du convertisseur.

Les moyens de pilotage peuvent de préférence comprendre au moins un deuxième convertisseur destiné à alimenter au moins un groupe de sources de lumière supplémentaire.

Avantageusement, un des groupes de sources de lumière peut réaliser la fonction lumineuse « feux diurnes » (DRL, Daytime Running Light) et un groupe différent peut réaliser la fonction lumineuse « feux de position » (PL, Position Light). Avantageusement, un groupe de sources de lumière supplémentaire peut réaliser la fonction lumineuse « indicateur de direction » (TI, Turn Indicator). Ce groupe supplémentaire peut être monté sur le même support que celui des autres groupes de sources de lumière.

De préférence, les sources de lumière peuvent comprendre des puces semi-conductrices émettrices de lumière, notamment des diodes électroluminescentes, LED, et/ou des LEDs de puissance et/ou des diodes laser.

Le dispositif selon l'invention peut de préférence comprendre un dispositif optique destiné à distribuer la lumière émise par chacun des groupes de sources de lumière pour réaliser lesdites fonctions lumineuses. Le dispositif optique peut comprendre au moins une lentille optique.

De préférence, le dispositif optique peut être un guide de lumière présentant au moins une face d'entrée pour recevoir des rayons lumineux émis par les groupes de sources de lumière et une face de sortie commune pour réaliser lesdites fonctions lumineuses.

De préférence, les sources de lumière de chacun des groupes peuvent être disposées dans le dispositif de façon à définir une signature optique similaire ou identique à celle définie par les autres groupes de sources de lumière.

Un procédé non couvert par les revendications concerne un procédé d'alimentation électrique d'un groupe de sources lumineuses parmi une pluralité de groupes de sources lumineuses, chaque groupe implémentant une fonction lumineuse spécifique d'un dispositif lumineux d'un véhicule automobile et chaque groupe se distinguant par un niveau d'alimentation électrique requis spécifique. Le procédé est remarquable en ce qu'il comprend les étapes de :
- mise à disposition d'un dispositif de pilotage de l'alimentation des sources lumineuses du dispositif lumineux, comprenant un convertisseur DC/DC apte à être commandé de façon à fournir une alimentation électrique spécifique en dépendance de la fonction lumineuse requise ;
- détection, à l'aide de moyens de détection, d'un niveau d'alimentation électrique fourni par le convertisseur dans un circuit électrique monté en charge du convertisseur ;
- sélection et commutation, à l'aide de moyens de commutation, d'un groupe de sources lumineuses vers la charge du convertisseur, le groupe choisi correspondant au groupe dont le niveau d'alimentation électrique requis correspond globalement au niveau d'alimentation électrique détecté.

Le dispositif selon l'invention présente l'avantage qu'il peut réaliser plusieurs fonctions lumineuses d'un véhicule automobile tout en utilisant des circuits convertisseurs standards et sans nécessiter un redéveloppement spécifique de ceux-ci. Les sources de lumière de chacun des groupes sont choisies de manière à pouvoir réaliser au mieux la lumière requise par la fonction lumineuse que le groupe implémente. Selon des modes de réalisation préférés de l'invention, une pluralité de groupes de sources de lumière peut notamment être alimentée par le biais d'un convertisseur unique. Des moyens commutateurs distincts du convertisseur, réalisables à faible coût en utilisant des composants électroniques simples, permettent en effet la conception modulable d'un tel dispositif.

D'autres caractéristiques et avantages de la présente invention seront mieux compris à l'aide de la description exemplaire et des dessins parmi lesquels :
- la figure 1 est une représentation schématique d'un mode de réalisation préféré du dispositif selon l'invention ;
- la figure 2 est une représentation schématique d'un mode de réalisation non couvert par l'invention ;
- la figure 3 est une représentation schématique d'un mode de réalisation préféré du dispositif selon l'invention ;
- la figure 4 est une représentation schématique d'un mode de réalisation préféré du dispositif selon l'invention ;
- la figure 5 est une représentation schématique d'un mode de réalisation préféré du dispositif selon l'invention ;
- la figure 6 est une représentation schématique d'un mode de réalisation préféré du dispositif selon l'invention.

Dans la description qui suit, des numéros de référence similaires seront utilisés pour décrire des concepts similaires à travers des modes de réalisation différents de l'invention. Ainsi, les numéros 100, 200, 300, 400, 500 et 600 décrivent un dispositif conforme à l'invention dans cinq modes de réalisation différents.

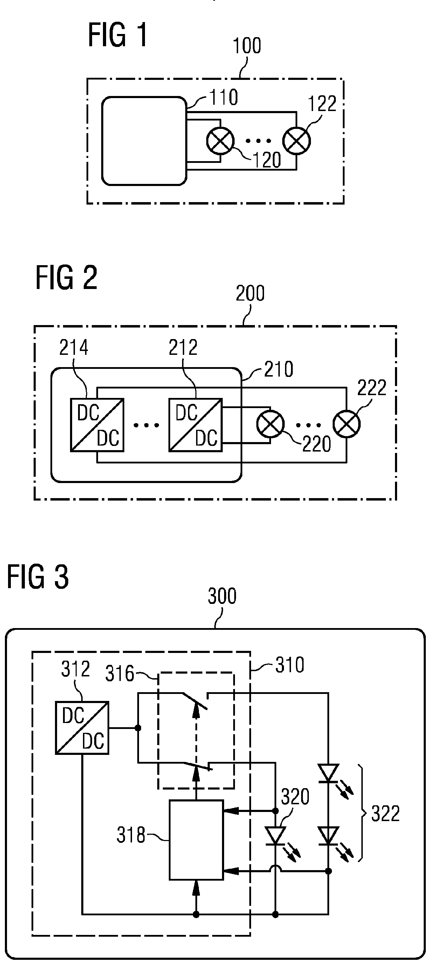

La figure 1 montre de manière schématique un dispositif 100 selon un mode de réalisation de l'invention. Il s'agit d'un dispositif lumineux pour un véhicule automobile. Les parties du dispositif qui n'ont pas de lien direct avec l'invention ne sont pas illustrées par souci de clarté de l'exposé. Notamment le dispositif est de manière connue alimenté en électricité par une source de courant interne au véhicule automobile, par exemple par la batterie du véhicule. Des moyens de pilotage 110 de l'alimentation d'une pluralité de sources de lumière font partie du dispositif. Ces moyens peuvent de manière connue comprendre au moins un élément ou circuit convertisseur, qui est apte à convertir une tension d'entrée d'une valeur donnée, en une tension de sortie d'une valeur différente. Le convertisseur peut être de type élévateur (boost) ou abaisseur (buck) de tension, ou être conforme à une autre architecture en soi connue par l'homme du métier, comme l'architecture « flyback » ou « SEPIC ». Le fonctionnement de tels convertisseurs étant en soi connu dans l'état de la technique, il ne sera pas décrit dans plus de détails dans ce qui suit. Dans l'exemple montré, les moyens de pilotage 110 comprennent deux sorties et peuvent fournir deux tensions de sorties distinctes à deux branches de circuit montées en charge des moyens de pilotage. Bien évidemment les moyens de pilotage peuvent également comprendre un nombre plus élevé de sorties sans pour autant sortir du contexte de la présente invention. Chacune des branches de charge comprend un groupe de sources de lumière 120 respectivement 122, illustrés par un symbole unique sur la figure 1. Chacun des groupes 120, 122 comprend de préférence une pluralité de sources de lumière, et les pluralités peuvent comprendre un nombre différent d'éléments. Chacun des groupes 120, 122 remplit une fonction lumineuse spécifique du dispositif et se distingue par un besoin de courant électrique d'une intensité spécifique. Lorsqu'il s'agit des fonctions PL et DRL par exemple, l'intensité de courant requise par le groupe qui implémente la fonction PL est moindre que celle requise par le groupe qui implémente la fonction DRL. Les moyens de pilotage de l'alimentation des sources de lumière sont configurés de façon à pouvoir alimenter de manière sélective chacun des groupes de sources de lumière de manière exclusive des autres groupes. Pour l'exemple donné précédemment, ceci veut dire que lorsque les sources de lumière qui implémentent la fonction PL sont allumées, les sources qui correspondent à la fonction DRL sont éteintes, et vice-versa. Les sources de lumière de chaque groupe sont de préférence adaptées aux besoins de la fonction lumineuse qu'elles implémentent. Il peut par exemple s'agir de diodes électroluminescentes. Dans ce qui suit, les termes « sources de lumière » et LED seront utilisés de manière équivalente, les LEDs étant un exemple de sources de lumière parmi d'autres qui rentrent dans le contexte de l'invention. Les sources de chacun des groupes 120, 122 sont de préférence disposées physiquement de sorte à définir une signature optique identique ou similaire. Par exemple, les sources des groupes 120, 122 peuvent être montées sur un support tel qu'un circuit imprimé, PCB, en s'alternant le long d'un contour qui définit la signature optique du dispositif lumineux. Alternativement, les sources de groupes 120, 122 peuvent suivre des contours similaires juxtaposés et rapprochés les uns des autres.

La figure 2 montre un mode de réalisation non couvert par l'invention, dans lequel le dispositif 200 comprend un élément ou circuit convertisseur DC/DC 212, 214 par groupe de sources de lumière branché en charge des moyens de pilotage 210. Cette architecture permet d'alimenter de manière sélective et exclusive un des groupes 220, 222. Un élément contrôleur non-illustré peut notamment être utilisé pour interpréter un signal de contrôle reçu par le système informatique du véhicule automobile et indiquant le besoin d'allumer par exemple le groupe 220. Sur réception d'un tel signal, l'élément contrôleur bascule le convertisseur 212 en mode de fonctionnement « enable » tandis que tous les autres convertisseurs passent ou restent en mode éteint « disable ». Chacun des convertisseurs est de préférence configuré et dimensionné de façon à fournir une tension et un courant électrique prédéterminés et adaptés aux sources de lumière qu'il est destiné à alimenter. Les dimensionnements requis dans de tels modes de réalisation sont à la portée de l'homme du métier.

La figure 3 montre un mode de réalisation préféré du dispositif selon l'invention. Le dispositif 300 comprend des moyens de pilotage 310 de l'alimentation électrique de plusieurs groupes de sources de lumière 320, 322 représentés à titre exemplaire comme des LEDs. Les moyens de pilotage 310 comprennent un élément ou circuit convertisseur 312 unique et commun à l'alimentation électrique de chacun des groupes 320, 322. Le convertisseur est notamment apte à alimenter chacun des groupes 320, 322 en un courant électrique et une tension électrique spécifiques et adaptés. Des moyens de commutation 316 sont prévus et configurés afin de pouvoir commuter un des groupes 320, 322, qui sont respectivement montés sur des branches de circuit parallèles, vers la sortie du convertisseur. A un instant donné, l'unique groupe commuté en charge du convertisseur est alimenté en électricité, tandis que les autres groupes ne le sont pas. La sélection du groupe de sources de lumière à commuter en charge du convertisseur se fait sur base d'un signal relayé aux moyens de commutation 316 par des moyens de détection 318. Ces moyens, illustrés de manière générique sur la figure 3, sont aptes à mesurer soit une indication de l'intensité du courant électrique qui circule dans la branche de circuit électrique montée en charge du convertisseur, soit une indication de la tension électrique aux bornes de ce circuit. Comme chaque fonction lumineuse, et donc chacun des groupes 320, 322 requiert une tension et un courant électrique spécifique, les moyens de détection peuvent ainsi détecter de façon indirecte le mode d'opération du convertisseur à tout instant.

Lors du fonctionnement du dispositif, les moyens de pilotage 310 reçoivent, par exemple par le biais d'un système informatique du véhicule automobile, un signal visant à allumer le groupe 320. Le convertisseur 312 est alors commandé de sorte à fournir une alimentation électrique qui correspond aux besoins prédéterminés du groupe 320. Quel que soit le groupe de sources commuté en charge du commutateur, les moyens de détection 318 détectent le niveau d'alimentation électrique fourni par le convertisseur et le relayent aux moyens de commutation 316. Les moyens de commutation sont configurés, par exemple en utilisant un élément microcontrôleur non-illustré, pour pouvoir retraduire le niveau d'alimentation électrique ainsi détecté vers le groupe de sources prédéterminé qui correspond à ce niveau d'alimentation. Dans l'exemple donné, il s'agit du groupe 320, qui est alors commuté en charge du convertisseur. En pratique le groupe correspondant à la fonction DRL est branché en charge par défaut.

De préférence les moyens de pilotage comprennent un premier tableau mettant en relation une fonction lumineuse avec un niveau d'alimentation électrique à fournir par le convertisseur. La commande du convertisseur est reflétée par l'entrée du tableau déterminée par la fonction lumineuse désirée. Les moyens de commutation utilisent de leur part un deuxième tableau qui met en relation un niveau d'alimentation électrique détecté avec un groupe de sources spécifique. Le groupe à commuter en charge du convertisseur est trouvé par identification de l'entrée du tableau qui correspond au niveau d'alimentation détecté. A titre d'exemple, dans le premier tableau, une fonction lumineuse A donnée correspond à un niveau d'alimentation donné B. Lorsque la fonction A est désirée, le convertisseur est commandé de façon à fournir l'alimentation B. Dans le deuxième tableau, un niveau détecté B' correspondant aux erreurs de mesures près à ce niveau d'alimentation B, correspond au groupe de sources C implémentant la fonction lumineuse A.

De cette façon, un même convertisseur peut être utilisé pour alimenter une pluralité de groupes de sources ayant des besoins d'alimentation électriques différents, sans pour autant nécessiter l'ajout de complexité au convertisseur. La modularité est assurée par les moyens de commutation qui prennent en charge le branchement du groupe de sources approprié au niveau de l'alimentation, et donc au mode d'opération du convertisseur, détecté.

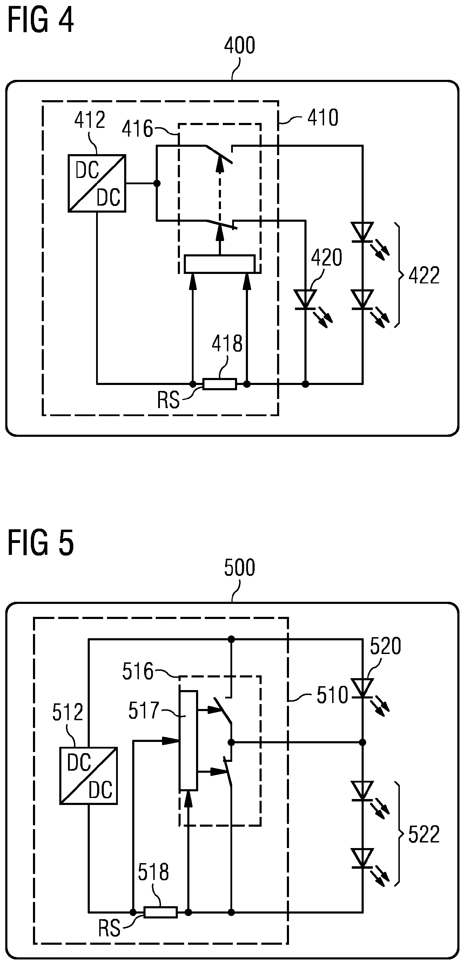

La figure 4 reprend l'exemple de la figure 3, en remplaçant à titre exemplaire les moyens de détection décrits avec une résistance de shunt Rs indiquée par la référence 418. La résistance est reliée d'une part à un noeud en aval de tous les groupes de sources 420, 422 et d'autre part à la masse. De manière connue, la tension mesurée aux bornes de la résistance peut être utilisée pour déduire l'intensité du courant électrique qui circule dans la branche montée en charge du convertisseur 412.

La figure 5 montre un mode de réalisation 500 similaire à ceux des figures 3 et 4, avec la différence que les groupes de sources 520, 522 sont montés en série sur une même branche de circuit. Bien que les sources de lumière soient illustrées comme étant branchées en série par groupes, des sources appartenant à différents groupes peuvent également s'alterner. Dans tous les cas, les moyens de commutation 516 sont configurés de façon à court-circuiter tous les groupes sauf celui identifié à l'aide d'un dispositif de sélection 517. La sélection est réalisée sur base du niveau d'alimentation détecté par les moyens de détection 518 selon le principe de détection décrit dans ce qui précède. Le dispositif de sélection peut par exemple comprendre un élément microcontrôleur.

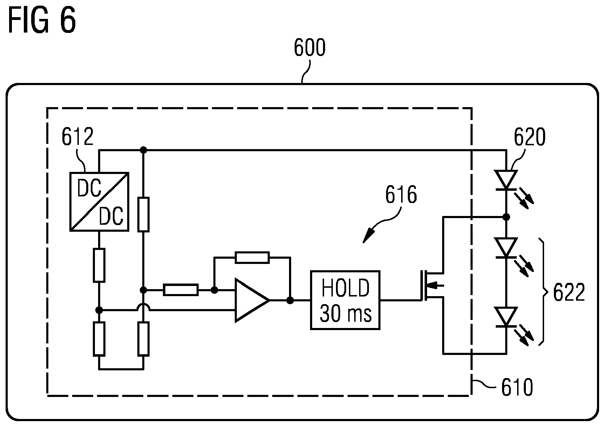

La figure 6 montre de manière schématique un exemple de circuit électronique 600 qui implémente le mode de réalisation qui vient d'être décrit. Les groupes de source 620, 622 sont montés en série sur une même branche de circuit. Les moyens de pilotage de l'alimentation 610 comprennent notamment un élément régulateur de tension 612 et des moyens de commutation 616. Les composants électroniques utilisés sont en soit connus dans l'art.

Dans tous les modes de réalisation de l'invention, les moyens commutateurs décrits peuvent être réalisés par un ou plusieurs éléments microcontrôleurs et/ou par un circuit de commutation impliquant un ou plusieurs élément(s) interrupteur(s) tels que des transistors, notamment des transistors à effet de champ ou de type MOSFET. Les moyens de commutation peuvent être montés sur un circuit imprimé commun avec les sources lumineuses.

Dans tous les modes de réalisation de l'invention, le dispositif lumineux comprend de manière avantageuse un dispositif optique commun à tous les groupes de sources de lumière, apte à distribuer ou à focaliser la lumière émise par n'importe lequel des groupes. Il s'agit par exemple d'une guide de lumière apte à recevoir des rayons lumineux par une face d'entrée, à l'intérieur duquel les rayons lumineux sont guidés vers une face de sortie, par laquelle ils quittent le guide.

## Revendications

1. Dispositif lumineux (100 ; 200 ; 300 ; 400 ; 500) pour un véhicule automobile comprenant un circuit électrique comprenant des moyens de commutation et une pluralité de sources de lumière et des moyens de pilotage (110 ; 210 ; 310 ; 410 ; 510) de l'alimentation de la pluralité de sources de lumière, la pluralité de sources étant divisée en au moins deux groupes de sources (120, 122 ; 220, 222 ; 320, 322 ; 420, 422 ; 520, 522) chaque groupe étant destiné à remplir une fonction lumineuse spécifique du dispositif et se distingue par un besoin de courant électrique d'une intensité spécifique pour la réalisation de ladite fonction lumineuse, les moyens de pilotage (110 ; 210 ; 310 ; 410 ; 510) étant aptes à alimenter de manière sélective chacun des groupes de sources de lumière de manière exclusive des autres groupes,
les moyens de pilotage (310 ; 410 ; 510) comprenant un convertisseur DC/DC (312 ; 412 ; 512) apte à convertir une tension électrique d'entrée en une tension électrique de sortie, en charge duquel chacun des groupes (320, 322 ; 420, 422 ; 520, 522) est commutable de manière exclusive des autres groupes à l'aide desdits moyens de commutation (316, 416, 516),
**caractérisé en ce que** lesdits moyens de commutation sont configurés pour commuter de manière sélective un des groupes de sources de lumière en charge du convertisseur, en dépendance d'un signal reçu de moyens de détection (318, 418, 518), ledit signal étant représentatif d'une valeur de l'intensité de courant électrique qui circule dans le circuit électrique monté en charge du convertisseur et/ou de la valeur de tension électrique détectée aux bornes dudit circuit.

2. Dispositif selon la revendication 1, **caractérisé en ce que** les moyens de commutation (316, 416, 516) comprennent un élément microcontrôleur.

3. Dispositif selon une des revendications revendication 1 ou 2, **caractérisé en ce que** les moyens de commutation (316, 416, 516) comprennent pour chaque groupe de sources de lumière un élément interrupteur, préférentiellement un transistor.

4. Dispositif (300, 400) selon une des revendications 1 à 3, **caractérisé en ce que** les groupes de sources de lumière sont disposés sur des branches de circuit parallèles, le circuit étant monté en charge du convertisseur, et **en ce que** les moyens de commutation (316, 416) sont configurés de façon à permettre le passage de courant électrique dans une des branches du montage de manière sélective et de manière exclusive des autres branches.

5. Dispositif (500) selon une des revendications 1 à 3, **caractérisé en ce que** les groupes de sources de lumière sont disposés sur une même branche dudit circuit monté en charge du convertisseur, et **en ce que** les moyens de commutation (516) sont configurés de façon à permettre le passage de courant électrique à travers les sources de lumière d'un des groupes de sources de manière sélective, en court-circuitant les sources des autres groupes.

6. Dispositif selon une des revendications 1 à 5, **caractérisé en ce que** les moyens de détection (318, 418, 518) comprennent une résistance de shunt branchée en aval des groupes de sources de lumière et reliée à la masse, permettant de mesurer une indication de l'intensité du courant circulant dans le circuit monté en charge du convertisseur.

7. Dispositif selon une des revendications 1 à 6, **caractérisé en ce que** les moyens de pilotage comprennent au moins un deuxième convertisseur, destiné à alimenter au moins un groupe de sources de lumière supplémentaire.

8. Dispositif selon une des revendications 1 à 7, **caractérisé en ce qu'**un des groupes de sources de lumière réalise la fonction lumineuse « feux diurnes » (DRL, Daytime Running Light) et un des groupes réalise la fonction lumineuse « feux de position » (PL, Position Light).

9. Dispositif selon une des revendications 1 à 8, **caractérisé en ce que** les sources de lumière comprennent des puces semi-conductrices émettrices de lumière, notamment des diodes électroluminescentes, LED.

10. Dispositif selon une des revendications 1 à 9, **caractérisé en ce que** le dispositif comprend un dispositif optique destiné à distribuer la lumière émise par chacun des groupes de sources de lumière pour réaliser lesdites fonctions lumineuses.

11. Dispositif selon une des revendications 1 à 10, **caractérisé en ce que** les sources de lumière de chacun des groupes sont disposées dans le dispositif de façon à définir une signature optique similaire ou identique à celle définie par les autres groupes de sources de lumière.

## Patentansprüche

1. Leuchtvorrichtung (100; 200; 300; 400; 500) für ein Kraftfahrzeug, die einen elektrischen Schaltkreis enthält, der Schalteinrichtungen und eine Vielzahl von Lichtquellen und Steuereinrichtungen (110; 210; 310; 410; 510) der Versorgung der Vielzahl von Lichtquellen enthält, wobei die Vielzahl von Quellen in mindestens zwei Gruppen von Quellen (120, 122; 220, 222; 320, 322; 420, 422; 520, 522) aufgeteilt ist, wobei jede Gruppe dazu bestimmt ist, eine spezielle Leuchtfunktion der Vorrichtung zu erfüllen, und sich durch einen Bedarf an elektrischem Strom spezieller Stärke zur Verwirklichung der Leuchtfunktion unterscheidet, wobei die Steuereinrichtungen (110; 210; 310; 410; 510) jede der Lichtquellengruppen ausschließlich der anderen Gruppen selektiv versorgen können,
wobei die Steuereinrichtungen (310; 410; 510) einen DC/DC-Wandler (312: 412; 512) enthalten, der eine elektrische Eingangsspannung in eine elektrische Ausgangsspannung umwandeln kann, unter dessen Last jede der Gruppen (320, 322; 420, 422; 520, 522) ausschließlich der anderen Gruppen mit Hilfe der Schalteinrichtungen (316, 416, 516) umschaltbar ist,
**dadurch gekennzeichnet, dass** die Schalteinrichtungen konfiguriert sind, eine der Lichtquellengruppen unter Last des Wandlers abhängig von einem von Erfassungseinrichtungen (318, 418, 518) empfangenen Signal selektiv umzuschalten, wobei das Signal für einen Wert der Stärke des elektrischen Stroms, der in dem unter Last des Wandlers eingebauten elektrischen Schaltkreis fließt, und/oder des an den Klemmen des Schaltkreisen erfassten Spannungswerts repräsentativ ist.

2. Vorrichtung nach Anspruch 1, **dadurch gekennzeichnet, dass** die Schalteinrichtungen (316, 416, 516) ein Mikrocontrollerelement enthalten.

3. Vorrichtung nach einem der Ansprüche 1 oder 2, **dadurch gekennzeichnet, dass** die Schalteinrichtungen (316, 416, 516) für jede Lichtquellengruppe ein Unterbrecherelement enthalten, vorzugsweise einen Transistor.

4. Vorrichtung (300, 400) nach einem der Ansprüche 1 bis 3, **dadurch gekennzeichnet, dass** die Lichtquellengruppen auf parallelen Schaltkreiszweigen angeordnet sind, wobei der Schaltkreis unter Last des Wandlers eingebaut ist, und dass die Schalteinrichtungen (316, 416) so konfiguriert sind, dass sie den selektiven und die anderen Zweige ausschließenden Durchgang elektrischen Stroms in einem der Zweige des Einbaus erlauben.

5. Vorrichtung (500) nach einem der Ansprüche 1 bis 3, **dadurch gekennzeichnet, dass** die Lichtquellengruppen auf dem gleichen Zweig des unter Last des Wandlers eingebauten Schaltkreises angeordnet sind, und dass die Schalteinrichtungen (516) so konfiguriert sind, dass sie den selektiven Durchgang elektrischen Stroms durch die Lichtquellen einer der Quellengruppen erlauben, indem die Quellen der anderen Gruppen kurzgeschlossen werden.

6. Vorrichtung nach einem der Ansprüche 1 bis 5, **dadurch gekennzeichnet, dass** die Erfassungseinrichtungen einen Shunt-Widerstand enthalten, der stromabwärts hinter den Lichtquellengruppen angeschlossen und mit Masse verbunden ist, der es ermöglicht, eine Anzeige der Stärke des im unter Last des Wandlers eingebauten Schaltkreises fließenden Stroms zu messen.

7. Vorrichtung nach einem der Ansprüche 1 bis 6, **dadurch gekennzeichnet, dass** die Steuereinrichtungen mindestens einen zweiten Wandler enthalten, der dazu bestimmt ist, mindestens eine zusätzliche Lichtquellengruppe zu versorgen.

8. Vorrichtung nach einem der Ansprüche 1 bis 7, **dadurch gekennzeichnet, dass** eine der Lichtquellengruppen die Leuchtfunktion "Tagesfahrlicht" (DRL, Daytime Running Light) und eine der Gruppen die Leuchtfunktion "Standlicht" (PL, Position Light) verwirklicht.

9. Vorrichtung nach einem der Ansprüche 1 bis 8, **dadurch gekennzeichnet, dass** die Lichtquellen Licht emittierende Halbleiterchips enthalten, insbesondere Elektrolumineszenzdioden LED.

10. Vorrichtung nach einem der Ansprüche 1 bis 9, **dadurch gekennzeichnet, dass** die Vorrichtung eine optische Vorrichtung enthält, die dazu bestimmt ist, das von jeder der Lichtquellengruppen emittierte Licht zu verteilen, um die Leuchtfunktionen zu verwirklichen.

11. Vorrichtung nach einem der Ansprüche 1 bis 10, **dadurch gekennzeichnet, dass** die Lichtquellen jeder der Gruppen so in der Vorrichtung angeordnet sind, dass sie eine optische Signatur ähnlich oder gleich derjenigen definieren, die von den anderen Lichtquellengruppen definiert wird.

## Claims

1. Lighting device (100; 200; 300; 400; 500) for an automotive vehicle comprising an electrical circuit comprising switching means and a plurality of light sources and means for controlling (110; 210; 310; 410; 510) the supply of power to the plurality of light sources, the plurality of sources being divided into at least two groups of sources (120, 122; 220, 222; 320, 322; 420, 422; 520, 522)
each group being intended to fulfill a specific lighting function of the device and is distinguished by a requirement for electric current of a specific intensity in order to carry out said lighting function;
the control means (110; 210; 310; 410; 510) being capable of selectively supplying power to each of the light source groups exclusively of the other groups, the control means (310; 410; 510) comprising a DC/DC converter (312; 412; 512) capable of converting an input voltage to an output voltage, each of the load groups (320, 322; 420, 422; 520, 522) of which may be switched exclusively of the other groups using said switching means (316, 416, 516);
**characterized in that** said switching means are configured to selectively switch one of the light source groups to load the converter, depending on a signal received from detection means (318, 418, 518), said signal being representative of a value of the intensity of an electric current that flows in the electrical circuit connected to load the converter and/or of the value of a voltage detected across the terminals of said circuit.

2. Device according to Claim 1, **characterized in that** the switching means (316, 416, 516) comprise a microcontroller element.

3. Device according to either of Claims 1 and 2, **characterized in that** the switching means (316, 416, 516) comprise, for each light source group, a switch element, preferably a transistor.

4. Device (300, 400) according to one of Claims 1 to 3, **characterized in that** the light source groups are positioned on parallel circuit branches, the circuit being connected to load the converter, and **in that** the switching means (316, 416) are configured in such a way as to allow electric current to flow into one of the branches of the assembly selectively and exclusively of the other branches.

5. Device (500) according to one of Claims 1 to 3, **characterized in that** the light source groups are positioned on one and the same branch of said circuit that is connected to load the converter, and **in that** the switching means (516) are configured in such a way as to allow electric current to flow through the light sources of one of the groups of sources selectively by shorting the sources of the other groups.

6. Device according to one of Claims 1 to 5, **characterized in that** the detection means (318, 418, 518) comprise a shunt resistor that is connected downstream of the light source groups and is connected to the ground, allowing measurement of an indicator of the intensity of the current flowing in the circuit connected to load the converter.

7. Device according to one of Claims 1 to 6, **characterized in that** the control means comprise at least one second converter, intended to supply power to at least one additional light source group.

8. Device according to one of Claims 1 to 7, **characterized in that** one of the light source groups carries out the lighting function of "daytime running lights" (DRLs) and one of the groups carries out the lighting function of "position light" (PL).

9. Device according to one of Claims 1 to 8, **characterized in that** the light sources comprise light-emitting semiconductor chips, in particular light-emitting diodes (LEDs).

10. Device according to one of Claims 1 to 9, **characterized in that** the device comprises an optical device that is intended to distribute the light emitted by each of the light source groups in order to carry out said lighting functions.

11. Device according to one of Claims 1 to 10, **characterized in that** the light sources of each of the groups are positioned in the device in such a way as to define an optical signature that is similar or identical to that defined by the other light source groups.
